# EUROPÄISCHE PATENTSCHRIFT

(11) **EP 0 535 004 B1**
(45) Veröffentlichungstag und Bekanntmachung des Hinweises auf die Patenterteilung: **26.07.1995**
(21) Anmeldenummer: 91909748.5
(22) Anmeldetag: 21.05.1991
(51) Int. Cl.: A47J 42/16

(54) **KORNMÜHLE**
CORN MILL
MOULIN A CEREALES

(30) Priorität: 25.05.1990 DE 4016924
(43) Veröffentlichungstag der Anmeldung: 07.04.1993
(73) Patentinhaber: HAWO'S KORNMÜHLEN GMBH, D-64853 Otzberg (DE)
(72) Erfinder: MOCK, Wolfgang, D-6111 Otzberg 1 (DE); GRIBAT, Wilfried, D-6111 Otzberg 1 (DE)
(74) Vertreter: Katscher, Helmut, Dipl.-Ing.
(86) Internationale Anmeldenummer: EP9100949
(87) Internationale Veröffentlichungsnummer: WO9118545

(56) Entgegenhaltungen:
- DE-A- 3 429 044
- DE-A- 3 535 119
- DE-B- 1 168 611
- DE-U- 8 711 489

## Beschreibung

Die Erfindung betrifft eine Kornmühle mit einem Mühlengehäuse und einem Mahlwerk, das aus einem oberen, gehäusefesten Mahlstein und einem unteren, angetriebenen Mahlstein besteht, der auf einer Motorwelle eines im Mühlengehäuse elastisch gelagerten Motors befestigt ist, wobei der kreisringförmige obere Mahlstein eine zentrale Zulauföffnung aufweist, in die ein Einlaufschacht mündet, und wobei die beiden Mahlsteine zur Veränderung des dazwischen gebildeten Mahlspalts axial relativ zueinander verstellbar sind, wobei der obere, gehäusefeste Mahlstein elastisch im Mühlengehäuse gelagert ist und die den unteren Mahlstein tragende Motorwelle mittels einer Verstelleinrichtung axial verstellbar ist.

Derartige Kornmühlen dienen überwiegend dazu, kleinere Getreidemengen für den unmittelbaren Gebrauch zu mahlen. Sie werden üblicherweise im Haushalt, aber auch im gewerblichen Bereich eingesetzt, beispielsweise in Naturkostläden oder in Küchen der Gemeinschaftsverpflegung oder von Restaurants. Wenn solche Kornmühlen eine für ein zufriedenstellendes Mahlergebnis notwendige Leistung aufweisen, arbeiten sie verhältnismäßig laut, was gerade bei den genannten Einsatzbereichen als besonders störend empfunden wird.

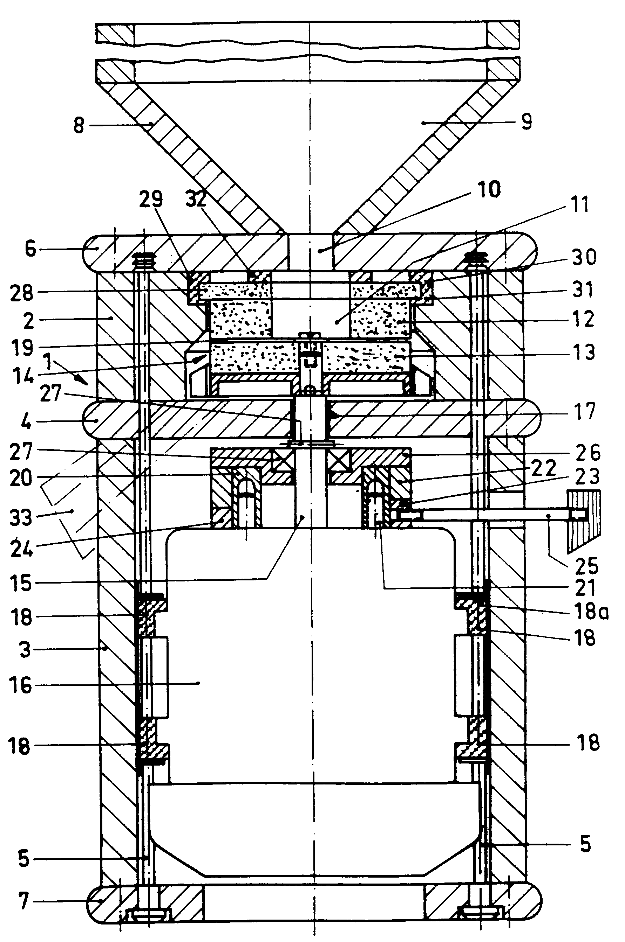

Zur Geräuschminderung und zur Verringerung der auf das Mühlengehäuse übertragenen Schwingungen ist es bei einer Kornmühle bekannt (DE-A 35 35 119, Fig. 2), den Motor im Inneren des Mühlengehäuses anzuordnen und auf Schwingungsdämpfern, beispielsweise Gummilagern elastisch am Mühlengehäuse abzustützen. Zur Veränderung des zwischen den beiden Mahlsteinen gebildeten Mahlspalts wird bei der bekannten Kornmühle der obere Mahlstein von einer axial im Mühlengehäuse geführten Hülse getragen.

Hierbei werden zwar die vom Motor unmittelbar ausgehenden Schwingungen bzw. Geräusche teilweise gedämpft. Der überwiegende Anteil der Schwingungen und Geräusche entsteht aber im Mahlwerk und wird deshalb durch die elastische Abstützung des Motors nicht gedämpft.

Bei einer bekannten Kornmühle der eingangs genannten Gattung (DE-A-3 429 044) sind der obere Mahlstein und der mit dem Motor verbundene untere Mahlstein an senkrechten Stäben geführt und über Federn abgestützt. Auch mit der dort vorgeschlagenen Verwendung von sog. "Silentblöcken" werden Schwingungen aus dem Mahlwerk nur unzureichend vom Mühlengehäuse ferngehalten. Eine genaue Zentrierung der beiden Mahlsteine gegeneinander ist über die Führungsstäbe erforderlich.

Aufgabe der Erfindung ist es daher, eine Kornmühle der eingangs genannten Gattung so auszugestalten, daß eine wesentliche Verringerung der auftretenden Geräusche und Schwingungen erreicht wird.

Diese Aufgabe wird erfindungsgemäß dadurch gelöst, daß der obere, gehäusefeste Mahlstein einen am Umfang vorspringenden Bund aufweist, der mindestens teilweise von einem Feststein-Haltering aus gummielastischem Material umgeben ist, der im Mühlengehäuse gehalten wird, daß der Feststein-Haltering in einer Bohrung des Mühlengehäuses an einem Bohrungsabsatz anliegt und daß der obere gehäusefeste Mahlstein mit seinem Feststein-Haltering in die Bohrung lose eingelegt ist und durch einen Gehäusedeckel gehalten wird.

Durch die elastische Aufnahme des oberen Mahlsteins im Mühlengehäuse wird verhindert, daß in wesentlichem Umfang Schwingungen oder Geräusche vom Mahlwerk auf das Mühlengehäuse übertragen werden, da auch der untere, angetriebene Mahlstein nur über die elastische Motorlagerung mit dem Mühlengehäuse verbunden ist. Trotz der elastischen Lagerung des oberen, gehäusefesten Mahlsteins ist dieser obere Mahlstein noch ausreichend stabil angeordnet, um eine sichere Verstellung des Mahlspalts zu ermöglichen. Es hat sich vielmehr überraschenderweise gezeigt, daß gerade durch die Kombination einer elastischen Lagerung des oberen Mahlsteins mit einer elastischen Lagerung des den unteren Mahlstein tragenden Motors ein günstiges Zusammenwirken der beiden Mahlsteine erreicht wird. Eine Begründung dafür könnte darin liegen, daß die beiden das Mahlwerk bildenden Mahlsteine gemeinsam schwingen können bzw. daß der obere, elastisch gelagerte Mahlstein sich den Schwingungen des unteren, mit der Masse des Motors verbundenen Mahlsteins anpaßt, so daß trotz der insbesondere auch in axialer Richtung auftretenden Schwingungen nur eine verhältnismäßig geringe Veränderung des eingestellten Mahlspalts eintritt.

Der Mahlstein läßt sich in konstruktiv sehr einfacher Weise dadurch erreichen, daß der obere, gehäusefeste Mahlstein einen am Umfang vorspringenden Bund aufweist, der mindestens teilweise von einem Feststein-Haltering aus gummielastischem Material umgeben ist. Der den oberen Mahlstein umgebende gummielastische Feststein-Haltering reicht einerseits als elastische Lagerung für den Mahlstein vollständig aus; andererseits hält der Haltering den Mahlstein ausreichend im Gehäuse fest, um eine genaue Einstellung des Mahlspalts durch die axiale Verstellung der Motorwelle zu erreichen.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist.

Die Zeichnung zeigt in einem senkrechten Schnitt eine Kornmühle mit einem Mühlengehäuse 1, das aus einem oberen Mahlwerksgehäuse 2 und einem unteren Mühlengehäuse 3 besteht, zwischen denen ein Zwischenboden 4 angeordnet ist. Senkrecht eingeschraubte Zuganker 5 verbinden einen Gehäusedeckel 6 mit einem Gehäuseboden 7 und halten auf diese Weise das Mahlwerksgehäuse 2 und das Mühlengehäuse 3 zusammen.

Der Gehäusedeckel 6 trägt einen Trichter 8, der einen Einlaufschacht 9 bildet.

Der Einlaufschacht 9 verjüngt sich zu einer Öffnung 10 im Gehäusedeckel 6 und mündet in eine zentrale Zulauföffnung 11 eines kreisringförmigen oberen Mahlsteins 12.

Der obere, gehäusefeste Mahlstein 12 bildet zusammen mit einem darunter angeordneten, im wesentlichen kreisscheibenförmigen unteren, angetriebenen Mahlstein 13 ein Mahlwerk 14.

Der untere, angetriebene Mahlstein 13 ist auf dem oberen Ende einer senkrechten Motorwelle 15 befestigt, die aus einem Motor 16 durch eine Wellenöffnung 17 im Zwischenboden 4 nach oben ragt.

Der Motor 16 ist im Mühlengehäuse 3 an elastischen Motorlagern 18 gelagert, die beispielsweise als Gummilager ausgeführt sind. Die elastischen Motorlager 18 sind über Tragplatten 18a am Mühlengehäuse 3 befestigt.

Zur Veränderung des zwischen den beiden Mahlsteinen 12 und 13 des Mahlwerks 14 gebildeten Mahlspalts 19 und damit zur Veränderung der Mahlfeinheit ist der untere Mahlstein 13 vertikal verstellbar. Hierzu ist ein ringförmiges Führungsteil 20 am Motorflansch an achsparallelen Stiften 21 axial verstellbar, jedoch undrehbar geführt. Das beispielsweise aus Kunststoff bestehende Führungsteil 20 ist an seinem äußeren Umfang gerastert und mit einem äußeren Ring 22 verbunden, dessen Unterseite 23 schraubenförmig verläuft. An dieser schraubenförmigen Unterseite 23 stützt sich ein Verstellring 24 ebenfalls mit einer schraubenförmigen Fläche ab, der das Führungsteil 20 drehbar umgibt. Der Verstellring 24 ist mit einem aus dem Gehäuse 1 herausgeführten Verstellhebel 25 verbunden.

Das Führungsteil 20 trägt an seiner Oberseite einen Lagerteller 26, in dem über ein Wälzlager 27 die Motorwelle 15 gelagert und axial abgestützt ist. Die Motorwelle 15 stützt sich axial über einen Stift 27a am Welzlager 27 ab.

Bei einer Verschwenkung des Verstellhebels 25 hebt bzw. senkt sich der Lagerteller 26 und damit auch die Motorwelle 15 und der untere Mahlstein 13. Dadurch wird der Mahlspalt 19 verstellt.

Der obere Mahlstein 12 ist im Mahlwerksgehäuse 2 elastisch gelagert. Hierzu weist der obere Mahlstein 12 an seinem oberen Umfang einen nach außen vorspringenden Bund 28 auf, der an seiner Oberseite, seiner Unterseite und an seinem Umfang von einem Feststein-Haltering 29 aus gummielastischem Material umgeben ist. Der Feststein-Haltering 29 ist in einer Bohrung 30 des Mahlwerksgehäuses 2 aufgenommen und liegt an einem Bohrungsabsatz 31 an. Der obere Mahlstein 12 ist mit seinem Feststein-Haltering 29 nur lose in die Bohrung 30 eingelegt und wird durch den aufgesetzten Gehäusedeckel 6 gehalten. Man erkennt aus der Zeichnung, daß der Feststein-Haltering 29 im Querschnitt die Gestalt eines U aufweist, das mit seinen Schenkeln den am Umfang des Mahlsteins 12 vorspringenden Bund 28 umgreift.

Außerdem ist zwischen dem Gehäusedeckel 6 und dem Rand der zentralen Zulauföffnung 11 des oberen Mahlsteins 12 ein elastischer Ring 32 eingelegt, der eine Abdichtung zwischen dem Gehäusedeckel 6 und dem oberen Mahlstein 12 bewirkt.

Ein am Umfang des angetriebenen, unteren Mahlsteins 13 angebrachter Mehlauswerfer verhindert, daß das Mehl in den Bereich unter den unteren Mahlstein 13 gelangt. Das Mehl wird zu einem in der Zeichnung mit strichpunktierten Linien nur angedeuteten, weil nicht in der Zeichenebene liegenden schrägen Auswurfschacht 33 gefördert.

Durch die elatische Lagerung sowohl des oberen Mahlsteins 12 als auch des den unteren Mahlstein 13 tragenden Motors 16 wird eine besonders starke Verminderung der Mahlgeräusche und der vom Mahlwerk 14 erzeugten Schwingungen erreicht.

## Patentansprüche

1. Kornmühle mit einem Mühlengehäuse (1) und einem Mahlwerk (14), das aus einem oberen, gehäusefesten Mahlstein (12) und einem unteren, angetriebenen Mahlstein (13) besteht, der auf einer Motorwelle (15) eines im Mühlengehäuse (1) elastisch gelagerten Motors (16) befestigt ist, wobei der kreisringförmige obere Mahlstein (12) eine zentrale Zulauföffnung aufweist, in die ein Einlaufschacht (9) mündet, wobei die beiden Mahlsteine (12, 13) zur Veränderung des dazwischen gebildeten Mahlspalts axial relativ zueinander verstellbar sind, wobei der obere, gehäusefeste Mahlstein (12) elastisch im Mühlengehäuse (1) gelagert ist und wobei die den unteren Mahlstein (13) tragende Motorwelle (15) mittels einer Verstelleinrichtung (22, 23, 25) axial verstellbar ist, dadurch gekennzeichnet, daß der obere, gehäusefeste Mahlstein (12) einen am Umfang vorspringenden Bund (28) aufweist, der mindestens teilweise von einem Feststein-Haltering (29) aus gummielastischem Material umgeben ist, der im Mühlengehäuse (1) gehalten wird, daß der Feststein-Haltering (29) in einer Bohrung (30) des Mühlengehäuses (1) an einem Bohrungsabsatz (31) anliegt und daß der obere, gehäusefeste Mahlstein (12) mit seinem Feststein-Haltering (29) in die Bohrung (30) lose eingelegt ist und durch einen Gehäusedeckel (6) gehalten wird.

2. Kornmühle nach Anspruch 1, dadurch gekennzeichnet, daß zwischen dem Gehäusedeckel (6) und dem Rand der zentralen Zulauföffnung (11) des oberen Mahlsteins (12) ein elastischer Ring (32) angeordnet ist.

3. Kornmühle nach Anspruch 1, dadurch gekennzeichnet, daß der Feststein-Haltering (29) im Querschnitt die Gestalt eines U aufweist, das mit seinen Schenkeln der am Umfang des Mahlsteins (12) vorspringenden Bund (28) umgreift.

4. Kornmühle nach Anspruch 1, dadurch gekennzeichnet, daß das Mahlwerk (14) mit senkrechter Achse im Mühlengehäuse (1) angeordnet ist.

## Claims

1. Grain mill with a mill casing (1) and a grinding gear (14) comprising a top grindstone (12), fixed to the casing, and a bottom, driven grindstone (13) which is fixed on a motor shaft (15) of a motor (16) supported resiliently in the mill casing (1), the circular top grindstone (12) having a central inlet aperture into which a gully (9) opens, the two grindstones (12, 13) being adjustable in relation to each other axially in order to change the grinding gap formed between them, the top grindstone (12) fixed to the casing being supported resiliently in the mill casing (1), and the motor shaft (15) supporting the lower grindstone (13) being adjustable axially by means of an adjustment mechanism (22, 23, 25), characterized in that the top grindstone (12), fixed to the casing, has a collar (28) projecting at the periphery, which is at least partially surrounded by a fixed stone-retaining ring (29) made of resilient rubber material, which is held in the mill casing (1), that the fixed stone- retaining ring (29) lies against a shoulder (31) in a drilled hole (30) of the mill casing (1) and that the top grindstone (12), fixed to the casing, with its fixed stone- retaining ring (29) is loosely inserted into the hole (30) and is held by a casing lid (6).

2. Grain mill according to Claim 1, characterized in that an elastic ring (32) is located between the casing lid (6) and the edge of the central inlet aperture (11) of the top grindstone (12).

3. Grain mill according to Claim 1, characterized in that the fixed stone-retaining ring (29) has in cross-section the shape of a U which encompasses with its sides the projecting collar (28) on the periphery of the grind stone (12).

4. Grain mill according to Claim 1, characterized in that the grinding gear (14) is located with a vertical axis in the mill casing (1).

## Revendications

1. Moulin à céréales comportant une caisse de moulin (1) et un dispositif de broyage (14), qui est constitué d'une meule supérieure (12) fixée à la caisse et d'une meule inférieure (13) entraînée, qui est fixée sur un arbre (15) d'un moteur (16) monté de manière souple dans la caisse (1) du moulin, la meule supérieure (12) formée en anneau circulaire présentant une ouverture centrale d'admission dans laquelle débouche un entonnoir d'introduction (9), les deux meules (12, 13) pouvant être déplacées l'une par rapport à l'autre axialement pour modifier l'espace de broyage formé entre elles, la meule supérieure (12) fixée à la caisse étant montée de manière souple dans la caisse (1) du moulin et l'arbre (15) du moteur, qui porte la meule inférieure (13), pouvant être déplacé axialement à l'aide d'un dispositif de réglage (22, 23, 25), caractérisé en ce que la meule supérieure (12) fixée à la caisse présente un collet (28) faisant saillie sur la périphérie, ledit collet étant entouré au moins partiellement par un anneau (29) de matériau de même élasticité que le caoutchouc pour bloquer la meule fixe, ledit anneau étant bloqué dans la caisse (1) du moulin, en ce que l'anneau de blocage (29) s'applique sur un épaulement (31) formé dans un alésage (30) de la caisse (1) du moulin et en ce que la meule supérieure (12) fixée à la caisse est introduite de manière lâche avec son anneau de blocage (29) dans l'alésage (30) et y est maintenue par un couvercle (6) de la caisse.

2. Moulin à céréales selon la revendication 1, caractérisé en ce qu'un anneau souple (32) est agencé entre le couvercle (6) de la caisse et le bord de l'ouverture d'admission centrale (11) de la meule supérieure (12).

3. Moulin à céréales selon la revendication 1, caractérisé en ce que l'anneau de blocage (29) de la meule fixe présente en coupe transversale la forme d'un U qui enserre, par ses branches, le collet (28) faisant saillie à la périphérie de la moule (12).

4. Moulin à céréales selon la revendication 1, caractérisé en ce que le dispositif de broyage (14) est agencé avec un arbre vertical dans la caisse (1) du moulin.
